# EUROPÄISCHE PATENTSCHRIFT

(11) **EP 0 869 043 B1**
(45) Veröffentlichungstag und Bekanntmachung des Hinweises auf die Patenterteilung: **29.12.2004**
(21) Anmeldenummer: 98103680.9
(22) Anmeldetag: 03.03.1998
(51) Int. Cl.: B60S 1/08, G01N 21/43

(54) **Sensoreinrichtung zur Erfassung des Benetzungs- und/oder Verschmutzungsgrades von Scheiben**
Sensing device for determining the degree of wetting and soiling of a windscreen
Dispositif détecteur pour déterminer la degré de l'humidité et de la contamination sur la surface d'un pare-brise

(30) Priorität: 04.04.1997 DE 19713834; 21.10.1997 DE 19746351
(43) Veröffentlichungstag der Anmeldung: 07.10.1998
(73) Patentinhaber: ROBERT BOSCH GMBH, 70442 Stuttgart (DE)
(72) Erfinder: Pientka, Rainer, 77855 Achern (DE); Meier, Hans, 77833 Ottersweier (DE); Schabanel, Francois, 94100 Saint Maux des Fossés (FR)

(56) Entgegenhaltungen:
- EP-A- 0 299 606
- EP-A- 0 371 949
- BE-A- 856 564
- US-A- 4 589 771
- US-A- 4 652 745
- US-A- 4 701 613
- US-A- 5 498 866

## Beschreibung

### Stand der Technik

Die Erfindung geht aus von einer Sensoreinrichtung nach dem Oberbegriff des Hauptanspruchs.

Bei Kraftfahrzeugen wird ein Regensensor zur Messung des Benetzungsgrades von Windschutzscheiben oder Heckscheiben im Wischfeld auf der Innenseite der Scheibe angebracht. Ist ein Automatikbetrieb der Wischanlage eingeschaltet und wird die Scheibe an der Stelle, an der der Sensor installiert ist, mit Feuchtigkeit benetzt, so löst er einen Wischvorgang aus.

Die Wirkungsweise des Sensors beruht auf einem optischen Prinzip: Ein durch einen Sender emittierter Lichtstrahl bekannter Intensität wird an einer ersten bestimmten Stelle in die Scheibe eingeleitet und durch eine definierte Länge der Scheibe durch mehrfache Totalreflexion innerhalb der Scheibe geleitet. An einer zweiten bestimmten Stelle wird der Lichtstrahl durch optische Auskopplung einem Empfänger und einem Meßsystem zugeführt, in dem die Restlichtintensität gemessen und ausgewertet wird.

Durch Benetzen der Scheibenoberfläche mit Wassertropfen wird ein Teil des Lichtstrahls nicht mehr totalreflektiert, sondern tritt aus der Scheibe heraus. Der hierbei eintretende Intensitätsverlust des Restlichts ist ein Maß für die Benetzung der Scheibenoberfläche. Unterhalb eines vorgebbaren Schwellwertes werden dann beispielsweise Mittel zur Scheibenreinigung automatisch eingeschaltet.

Derartige Regensensoren werden häufig in Kraftfahrzeugen in Höhe des Rückspiegels angebracht, um die Sicht des Fahrers durch das Sensorgehäuse nicht zu beeinträchtigen. In einigen Kraftfahrzeugen befindet sich an dieser Stelle jedoch ein in der Windschutzscheibe integrierter Lichtfilter, beispielsweise ein den oberen Rand der Scheibe färbender Grün- oder Graukeil. Eine Positionierung des optischen Regensensors im Lichtfilter ist dann nicht möglich, wenn die Wellenlänge des verwendeten Senderlichtes in einem Bereich liegt, der im wesentlichen durch den Lichtfilter gedämpft wird, da durch die mehrfache Totalreflexion in der Scheibe der Lichtstrahl mehrmals durch den Lichtfilter geht und dabei unzulässig stark gedämpft wird.

US-A-5 498 866 offenbart eine Sensoreinrichtung mit einem Sender, einer Scheibe aus einem Verbund von Schichten, einem Empfänger und einer teilweise reflektierenden Zwischenschicht.

### Vorteile der Erfindung

Die erfindungsgemäße Sensoreinrichtung mit den kennzeichnenden Merkmalen des Hauptanspruchs hat den Vorteil, daß die Senderstrahlung des Regensensors bei Durchgang durch die Scheibe an einem Reflexionsmittel in der Scheibe derart reflektiert bzw. totalreflektiert wird, daß die Dämpfung durch die optisch stärker absorbierende Schicht des Lichtfilters verringert wird.

Da die Frontscheibe eines Kraftfahrzeugs in bekannter Weise aus einem Verbund von mehreren Schichten besteht und der Lichtfilter üblicherweise als eine optisch stärker absorbierende Schicht der Verbundglasscheibe ausgeführt ist, kann zwischen dieser und der vom Kraftfahrzeuginneren weggerichteten äußeren Schicht ein Reflexionsmittel angeordnet werden, so daß die Senderstrahlung unter Totalreflexion bzw. Reflexion an der Außenseite der äußeren Schicht und dem Reflexionsmittel durch die Scheibe geleitet wird.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist, daß das Reflexionsmittel auf unterschiedliche Art und Weise realisiert werden kann, so daß für unterschiedlich hergestellte oder ausgeführte Verbundglasscheiben optimale Lösungen gefunden werden können.

Vorteilhaft sind weiterhin die sich durch das Reflexionsmittel ergebenden kürzeren optischen Wege des Lichtstrahls in der Scheibe. Damit erfolgt bei gleichbleibender Länge der Meßstrecke des Regensensors eine größere Anzahl von Totalreflexionen bzw. Reflexionen, so daß eine homogenere Ausleuchtung der Meßstrecke gegeben ist. Damit wird die Empfindlichkeit des Regensensors im Bereich der Meßstrecke homogenisiert und damit erhöht.

Ein weiterer Vorteil ergibt sich aus der Möglichkeit auf eine die Innenseite der Scheibe heizende Heizvorrichtung zu verzichten, da die Benetzung der Innenseite der Scheibe, beispielsweise durch Kondensat, praktisch keinen Einfluß mehr auf die feuchtigkeitsbedingte Signalabschwächung und damit auf die Funktionssicherheit des Regensensors ausübt.

### Zeichnung

Zwei Ausführungsbeispiele der Erfindung sind in der Zeichnung dargestellt und in der nachfolgenden Beschreibung näher erläutert. Es zeigen Figur 1 einen Querschnitt einer Sensoreinrichtung, bestehend aus einem optischen Regensensor auf einer herkömmlichen Scheibe, Figur 2 einen Querschnitt der verbesserten Scheibe im Bereich der Meßstrecke des Regensensors nach einem ersten Ausführungsbeispiel, Figur 3 einen Querschnitt der verbesserten Scheibe im Bereich der Meßstrecke des Regensensors nach einem zweiten Ausführungsbeispiel.

### Beschreibung der Ausführungsbeispiele

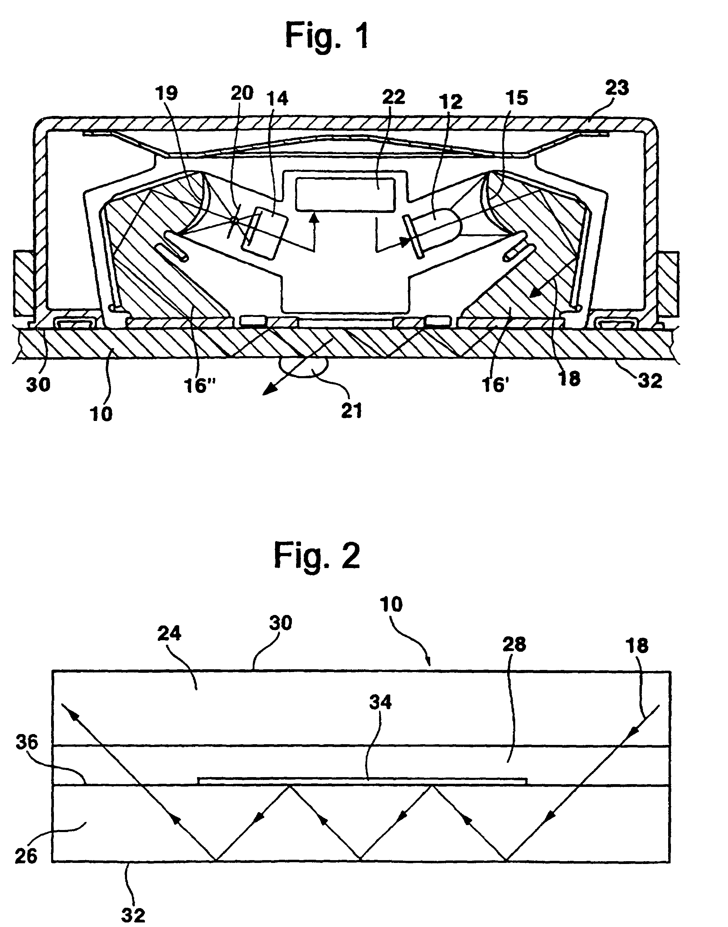

Figur 1 zeigt einen an einer Glasscheibe 10 angebrachten optischen Regensensor. Als Scheibe 10 ist beispielsweise eine Windschutzscheibe, eine Heckscheibe oder eine sonstige Scheibe, deren Benetzung gemessen werden soll, zu verwenden. Der Regensensor weist eine Diode (LED) als Sender 12 und eine Photodiode als Empfänger 14 auf, die zusammen mit je zwei Lichtleitern 16', 16'' und einem Teil der Scheibe 10 einen optischen Meßkreis bilden. Das aus dem Sender 12 austretende Licht wird an einer Eingangslinse 15 des ersten Lichtleiters 16' gebündelt und an totalreflektierenden Flächen umgelenkt, so daß es an einer Austrittsfläche als nahezu paralleler Lichtstrahl 18 in einem definierten Winkel in die Windschutzscheibe 10 eindringen kann.

Bei herkömmlichen Scheiben 10 wird nach dem Eindringen des Lichtstrahls 18 in die Scheibe 10 dieser mehrmals an der Außenseite 32 und an der Innenseite 30 der Scheibe 10 totalreflektiert und/oder reflektiert.

An einer geeigneten Stelle gelangt der Lichtstrahl 18 über den zweiten Lichtleiter 16'', einer linsenartig gekrümmten Lichtaustrittsfläche 19 und einer Blende 20 auf den Empfänger 14. Je nach Benetzungsgrad der Scheibe 10 ändert sich die vom Empfänger 14 empfangene Lichtmenge, da durch Regentropfen 21 im Meßbereich des Regensensors ein Teil des Lichtstrahls 18 aus der Scheibe ausgekoppelt wird. Das Signal des Empfängers 14 wird anschließend an eine im Regensensor oder außerhalb diesen befindliche Auswerteelektronik 22 geleitet, dort aufbereitet und ausgewertet.

Der Regensensor und Teile der Auswerteelektronik 22 sind in einem Gehäuse 23 untergebracht. Dieses Gehäuse 23 wird beispielsweise an metallischen Klemmverbindungen angeklipst, die auf der Scheibe 10 angeklebt sind.

Figur 2 zeigt einen Querschnitt durch die neuartige Scheibe 10 im Bereich der Meßstrecke des Regensensors. Die Scheibe 10 ist eine Verbundglasscheibe mit einer in das Kraftfahrzeuginnere gerichteten inneren Scheibe 24, einer äußeren Scheibe 26 und einer dazwischen angeordneten eingefärbten Verbundglasfolie 28 als Lichtfilter, die Licht einer bestimmten Wellenlänge stärker absorbiert als die innere oder äußere Scheibe 24, 26. Der Lichtfilter dämpft Sonnenlicht eines bestimmten Wellenlängenbereichs, so daß der Fahrer des Kraftfahrzeugs nicht geblendet wird. Erfindungsgemäß wird im Bereich der Meßstrecke ein Reflexionsmittel 34 zwischen der Innenseite 36 der äußeren Scheibe 26 und der stärker absorbierenden Folie 28 angebracht.

Die erfindungsgemäße Sensoreinrichtung nach Figur 2 funktioniert folgendermaßen:

Erfindungsgemäß wird in der Scheibe 10 im Bereich der Meßstrecke des Regensensors ein Reflexionsmittel 34 derart angeordnet, daß die Dämpfung des Lichtstrahls 18 durch die Folie 28 verringert wird, indem der Lichtstrahl 18 die Folie 28 lediglich beim Ein- und Auskoppeln des Lichtstrahls 18 in bzw. aus der Scheibe 10 durchquert. Zwischen der Ein- und Auskopplung des Lichtstrahls 18 wird der in der Auswerteelektronik 22 ausgewertete Lichtstrahl 18 an der Oberfläche des Reflexionsmittels 34 zur Außenseite 32 der Scheibe 10 zurückreflektiert und gelangt dort nicht in die stärker absorbierende Folie 28.

Das Reflexionsmittel 34 kann beispielsweise auf der Innenseite 36 der äußeren Scheibe 26 oder auf der Oberfläche der Folie 28 aufgebracht sein. Ebenfalls möglich ist es, das Reflexionsmittel 34 zwischen äußerer Scheibe 26 und Folie 28 einzulegen.

Als Reflexionsmittel 34 kann beispielsweise eine dünne Metallfolie, vorzugsweise aus Aluminium, oder eine metallisch bedampfte dünne Kunststoffolie eingesetzt werden. Diese kann adhäsiv auf der Innenseite 36 der äußeren Scheibe 32 angebracht sein. Diese Reflexionsmittel 34 sind jedoch zu sehen.

Eine weitere Ausführungsform des Reflexionsmittels 34 kann durch eine im wesentlichen transparente Folie oder Schicht realisiert werden, deren Brechungsindex sich von dem der Scheibe 10 unterscheidet. Der Unterschied im Brechungsindex bewirkt eine Reflexion eines Teils des schräg einfallenden Lichtstrahls 18 am Reflexionsmittel 34. Bei geeigneter Wahl des Reflexionsmittels 34 wird daher die Lichtdurchlässigkeit der Scheibe 10 für den vom Sender 12 emittierten Lichtstrahl 18 verbessert bzw. die benetzungsunabhängigen Verluste reduziert.

Das Reflexionsmittel 34 ist ebenfalls durch direkte Beschichtung der Innenseite 36 der äußeren Scheibe 32 zu realisieren, beispielsweise durch Bestreichen, Bedampfen oder Bekleben.

Das Reflexionsmittel 34 ist generell auf das vom Sender 12 emittierte Licht mit bekannter Wellenlänge derart abgestimmt, daß das Reflexionsmittel 34 Licht dieser Wellenlänge am stärksten reflektiert.

Durch die kürzeren optischen Wege des Lichtstrahls 18 in der Scheibe 10 bei gleichbleibender Länge der Meßstrecke, erfolgt eine größere Anzahl von Totalreflexionen bzw. Reflexionen, so daß eine homogenere Ausleuchtung der Meßstrecke, d.h. der Außenseite 32 der Scheibe 10, gegeben ist. Damit wird die Empfindlichkeit des Regensensors im Bereich der gesamten Meßstrecke homogenisiert.

Kondensat oder eine andere, bei herkömmlichen Sensoreinrichtungen unerwünschte Benetzung auf der Innenseite 30 der inneren Scheibe 24, hat bei Verwendung eines Reflexionsmittels 34 keinen Einfluß mehr auf die Funktionssicherheit des Regensensors, da an der Innenseite 30 der Scheibe 10 keine Totalreflexion und damit mögliche Auskopplung des Lichtstrahls 18 bei Benetzung stattfindet. Daher kann Kondensat auf der Innenseite 30 nicht zu einer Signalabschwächung des Empfängers 14 führen. Infolgedessen kann auf eine Heizung im Regensensor, die einen Beschlag auf der Innenseite 30 der inneren Scheibe 24 verhindern soll, verzichtet werden.

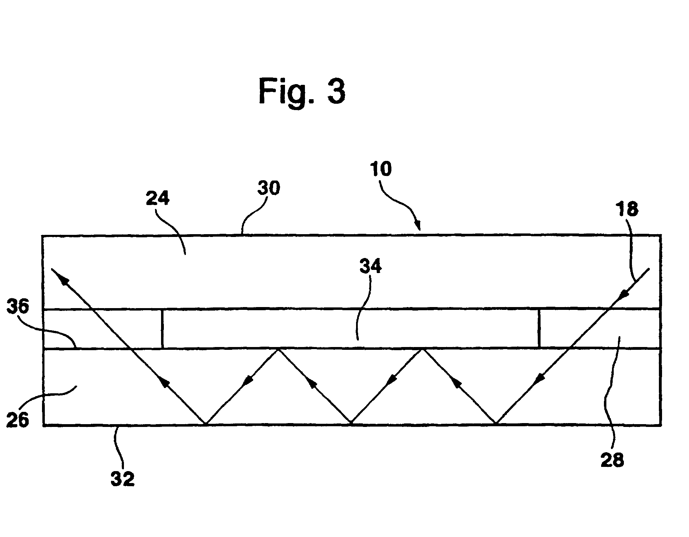

Figur 3 zeigt ein weiteres Ausführungsbeispiel der erfindungsgemäßen Sensoreinrichtung mit einem Querschnitt der Scheibe 10 im Bereich der Meßstrecke des Regensensors analog zu Figur 2. Die Scheibe 10 weist einen Verbund von Schichten auf, mit einer inneren Scheibe 24, einer äußeren Scheibe 26 und einer zwischen beiden Scheiben 24, 26 eingelegten Folie 28, die im Bereich einer inneren Totalreflexion des Lichtstrahls 18 an der Innenseite 36 der äußeren Scheibe 26 ausgestanzt ist.

Das Ausstanzen geschieht während der Fertigung der Scheibe 10. Beim anschließenden Zusammenfügen der zwei Scheiben 24, 26 entsteht ein Hohlraum als Reflexionsmittel 34 für den Lichtstrahl 18, der in Abhängigkeit des Fertigungsverfahrens mit feuchtigkeitsfreier Luft bei niedrigem Luftdruck gefüllt ist bzw. ein Vakuum enthält.

Durch das Verhältnis der Brechungsindize von äußerer Scheibe 26 und Luft bzw. Vakuum im Hohlraum sowie dem Einfallswinkel des Lichtstrahls 18 durchläuft dieser an der Innenseite 36 der äußeren Scheibe 26 eine Totalreflexion wie an der Außenseite 32 der äußeren Scheibe 26. In dem Hohlraum kann sich jedoch keine Feuchtigkeit ansammeln, die dazu führt, daß Teile des Lichtstrahls 18 aus der äußeren Scheibe 26 in den Hohlraum und die innere Scheibe 24 ausgekoppelt werden. Daher ist die Totalreflexion in der Scheibe 10 feuchtigkeitsunabhängig.

## Patentansprüche

1. Sensoreinrichtung, insbesondere für Kraftfahrzeuge, zur Erfassung des Benetzungs- und/oder Verschmutzungsgrades an Scheiben, mit einem Sender (12) und einer Scheibe (10), wobei der Sender (12) Strahlung (18) in die Scheibe (10) abgibt, die unter Totalreflexion in der Scheibe (10) geleitet wird, und einem Empfänger (14), der die aus der Scheibe (10) heraustretende Strahlung (18) detektiert, **dadurch gekennzeichnet, daß** die Scheibe (10) einen Verbund von Schichten (24, 26, 28) aufweist und daß ein Reflexionsmittel (34) zwischen zwei Schichten (24, 26, 28) der Scheibe (10) derart angeordnet ist, daß die Strahlung (18) unter Totalreflexion an der Außenseite (32) der Scheibe (10) und an dem Reflexionsmittel (34) in der Scheibe (10) geleitet wird.

2. Sensoreinrichtung nach Anspruch 1, **dadurch gekennzeichnet, daß** die Scheibe (10) wenigstens eine optisch stärker absorbierenden Schicht (28) und eine äußere Scheibe (26) aufweist, zwischen denen das Reflexionsmittel (34) angeordnet ist.

3. Sensoreinrichtung nach Anspruch 2, **dadurch gekennzeichnet, daß** das Reflexionsmittel (34) auf der Innenseite (36) der äußeren Scheibe (26) oder auf der Oberfläche der optisch stärker absorbierenden Schicht (28) aufzubringen oder zwischen äußerer Scheibe (26) und der optisch stärker absorbierenden Schicht (28) einzulegen ist.

4. Sensoreinrichtung nach einem der vorhergehenden Ansprüche, **dadurch gekennzeichnet, daß** als Reflexionsmittel (34) eine Metallfolie oder eine metallisch bedampfte Kunststoffolie einzusetzten ist.

5. Sensoreinrichtung nach einem der vorhergehenden Ansprüche, **dadurch gekennzeichnet, daß** als Reflexionsmittel (34) eine Folie bzw. Schicht, deren Brechungsindex sich von dem Brechungsindex der an das Reflexionsmittel (34) grenzenden Schicht (26) unterscheidet, einzusetzten ist.

6. Sensoreinrichtung nach einem der vorhergehenden Ansprüche, **dadurch gekennzeichnet, daß** das Reflexionsmittel (34) durch Beschichtung, Bedampfung oder Beklebung einer der Schichten (26, 28) aufgebracht ist.

7. Sensoreinrichtung nach einem der vorhergehenden Ansprüche, **dadurch gekennzeichnet, daß** die optisch stärker absorbierende Schicht (28) als Lichtfilter mit einer eingefärbten Verbundglasfolie oder Polyvinylbutyrol-Folie (PVB) realisiert ist.

8. Sensoreinrichtung nach einem der vorhergehenden Ansprüche, **dadurch gekennzeichnet, daß** als Reflexionsmittel (34) eine der Schichten (24, 26, 28), insbesondere eine optisch stärker absorbierende Schicht (28), einen Hohlraum aufweist, der mit Gas, insbesondere mit Luft, gefüllt ist oder ein Vakuum aufweist und dessen Brechungsindex sich von dem Brechungsindex der an das Reflexionsmittel (34) grenzenden Schicht (26) unterscheidet.

## Claims

1. Sensor device, in particular for motor vehicles, for detection of the degree of wetting and/or contamination of glass panes, having a transmitter (12) and a glass pane (10), the transmitter (12) emitting radiation (18) into the glass pane (10), which radiation (18) is carried in the glass pane (10) with total internal reflection, and having a receiver (14) which detects the radiation (18) that emerges from the glass pane (10), **characterized in that** the glass pane (10) has a composite system of layers (24, 26, 28), and **in that** a reflection means (34) is arranged between two layers (24, 26, 28) of the glass pane (10) such that the radiation (18) is carried, with total internal reflection, on the outside (32) of the glass pane (10) and on the reflection means (34) in the glass pane (10).

2. Sensor device according to Claim 1, **characterized in that** the glass pane (10) has at least one optically more strongly absorbent layer (28) and an outer glass pane (26), between which the reflection means (34) is arranged.

3. Sensor device according to Claim 2, **characterized in that** the reflection means (34) can be applied on the inside (36) of the outer glass pane (26) or on the surface of the optically more strongly absorbent layer (28), or can be inserted between the outer glass pane (26) and the optically more strongly absorbent layer (28).

4. Sensor device according to one of the preceding claims, **characterized in that** a metal foil or a metallically vapour-deposited plastic film can be used as the reflection means (34).

5. Sensor device according to one of the preceding claims, **characterized in that** a foil, film or layer whose refractive index is not the same as the refractive index of the layer (26) which is adjacent to the reflection means (34) can be used as the reflection means (34).

6. Sensor device according to one of the preceding claims, **characterized in that** the reflection means (34) is applied by coating, vapour deposition or adhesive bonding of one of the layers (26, 28).

7. Sensor device according to one of the preceding claims, **characterized in that** the optically more strongly absorbent layer (28) is in the form of a light filter with a coloured composite glass sheet or a polyvinyl butyral film (PVB).

8. Sensor device according to one of the preceding claims, **characterized in that** one of the layers (24, 26, 28), in particular an optically more strongly absorbent layer (28), has a cavity as the reflection means (34), which is filled with gas, in particular with air, or contains a vacuum, and whose refractive index is not the same as the refractive index of the layer (26) which is adjacent to the reflection means (34).

## Revendications

1. Dispositif détecteur, en particulier pour véhicules automobiles, destiné à détecter le degré d'embuage et/ou de salissure sur des vitres, comprenant un émetteur (12) et une vitre (10), l'émetteur (12) projetant un rayonnement (18) dans la vitre (10), rayonnement qui est conduit par réflexion totale dans la vitre (10), un récepteur (14) qui détecte le rayonnement (18) sortant de la vitre (10),
**caractérisé en ce que**
la vitre (10) présente un ensemble composite de couches (24, 26, 28), et un milieu réfléchissant (34) est disposé entre deux couches (24, 26, 28) de la vitre (10) de telle manière que le rayonnement (18) soit conduit par réflexion totale sur le côté extérieur (32) de la vitre (10) et sur le milieu réfléchissant (34) situé dans la vitre (10).

2. Dispositif détecteur selon la revendication 1,
**caractérisé en ce que**
la vitre (10) présente au moins une couche optiquement plus absorbante (28) et une vitre extérieure (26), avec le milieu réfléchissant (34) disposé entre celles-ci.

3. Dispositif détecteur selon la revendication 2,
**caractérisé en ce que**
le milieu réfléchissant (34) est appliqué sur le côté intérieur (36) de la vitre extérieure (26) ou sur la surface supérieure de la couche optiquement plus absorbante (28), ou interposé entre la vitre extérieure (26) et la couche optiquement plus absorbante (28).

4. Dispositif détecteur selon une des revendications précédentes,
**caractérisé en ce que**
comme milieu réfléchissant (34) on utilise une pellicule métallique ou une pellicule de matière plastique munie d'une vaporisation métallique.

5. Dispositif détecteur selon une des revendications précédentes,
**caractérisé en ce que**
comme milieu réfléchissant (34) on utilise une feuille ou couche dont l'indice de réfraction est différent de l'indice de réfraction de la couche (26) adjacente au milieu réfléchissant (34).

6. Dispositif détecteur selon une des revendications précédentes,
**caractérisé en ce que**
le milieu réfléchissant (34) est appliqué par enduction, vaporisation ou collage d'une des couches (26, 28).

7. Dispositif détecteur selon une des revendications précédentes,
**caractérisé en ce que**
la couche optiquement plus absorbante (28) est réalisée sous la forme d'un filtre optique comportant une feuille de verre composite ou feuille de polyvinyl butyrol (PVB) colorée.

8. Dispositif détecteur selon une des revendications précédentes,
**caractérisé en ce que**
pour constituer le milieu réfléchissant (34), une des couches (24, 26, 28), en particulier une couche optiquement plus absorbante (28), présente une cavité remplie de gaz, en particulier d'air, ou qui présente un vide, et dont l'indice de réfraction est différent de l'indice de réfraction de la couche (24) adjacente au milieu réfléchissant (34).
